# FASCICULE DE BREVET EUROPEEN

(11) **EP 0 577 522 B1**
(45) Date de publication et mention de la délivrance du brevet: **27.09.1995**
(21) Numéro de dépôt: 93401729.4
(22) Date de dépôt: 02.07.1993
(51) Int. Cl.: H01G 4/228, H01G 4/232, B23K 3/06

(54) **Procédé de fabrication de condensateurs feuilletés**
Herstellungsverfahren für Schichtkondensatoren
Method of manufacturing stacked capacitors

(30) Priorité: 03.07.1992 FR 9208212
(43) Date de publication de la demande: 05.01.1994
(73) Titulaire: COMPAGNIE EUROPEENNE DE COMPOSANTS ELECTRONIQUES LCC, F-92402 Courbevoie (FR)
(72) Inventeur: Mysson, Philippe, F-92402 Courbevoie Cédex (FR); Stephan, Ronan, F-92402 Courbevoie Cédex (FR)
(74) Mandataire: Guérin, Michel

(56) Documents cités:
- EP-A- 0 112 229
- EP-A- 0 460 998
- US-A- 4 046 105
- US-A- 4 226 011

## Description

La présente invention concerne un procédé de fabrication de condensateurs feuilletés réalisés par empilement de films plastiques métallisés. Un procédé avec les caractéristiques de la première partie de la revendication 1 est par exemple connu de EP-A-0 112 229.

L'une des étapes du procédé consiste à enrouler sur une roue de grand diamètre au moins une paire de films plastiques métallisés. Chaque film plastique métallisé se présente sous la forme d'un ruban issu de la découpe d'un laize de film plastique métallisé de grande largeur. Lors de cette phase d'enroulement, une marge latérale non métallisée est réalisée sur chacun des deux films de la paire. Les marges latérales non métallisées sont réalisées sur des côtés opposés afin d'obtenir une paire de films constituée d'un film de rang pair et d'un film de rang impair.

On obtient ainsi un ruban capacitif comportant des couches de rang pair et impair alternées, appelé condensateur-mère. On recouvre ensuite avec un métal ou un alliage chacun des flancs du ruban capacitif afin de réaliser des armatures de sortie. Chaque armature de sortie permet de relier mécaniquement et électriquement entre elles les métallisations des couches de même rang. Cette opération, réalisée par projection de métal en fusion, est connue sous la dénomination de shoopage. Afin d'améliorer l'accrochage des gouttes de métal en fusion sur les films de même rang il est recommandé de décaler les films de rang pair par rapport aux films de rang impair.

Le condensateur-mère est alors découpé en blocs élémentaires. Chaque bloc constitue un condensateur feuilleté de forme généralement parallélépipèdique et comprenant deux faces métallisées constituant les armatures.

L'étape de brasage des connexions sur chacune des armatures du condensateur intervient alors.

Selon l'art antérieur, la technique de brasage sur des condensateurs à films plastiques utilise la refusion par arc électrique ou par faisceau laser d'un alliage d'étain-plomb déposé par shoopage sur le condensateur film. En fondant du fait de l'énergie apportée, l'alliage d'étain-plomb assure le contact électrique et la tenue mécanique des connexions sur le condensateur.

Le condensateur est ensuite encapsulé dans un boîtier grâce à une résine thermodurcissable ou recouvert de résine époxy par la méthode dite du bain fluidisé.

La technique de brasage décrite ci-dessus présente plusieurs inconvénients :
- elle nécessite d'approcher deux électrodes des pièces à connecter, ce qui en limite la cadence.
- elle nécessite des nettoyages fréquents desdites électrodes afin de maintenir une qualité minimale du joint de soudure.

Selon le procédé de brasage de l'art antérieur, une bonne tenue mécanique des connexions est difficile à obtenir. La mauvaise tenue mécanique des connexions se traduit alors par un mauvais contact électrique, lequel dégrade l'angle de perte des condensateurs.

Ces inconvénients proviennent principalement du fait que la refusion de l'alliage déposé sur les deux côtés du condensateur à film plastique n'est que ponctuelle et correspond à la dimension de l'électrode ou du faisceau laser.

L'invention ne présente pas ces inconvénients.

La présente invention a pour objet un procédé de fabrication de condensateurs feuilletés réalisés par empilement de films plastiques métallisés, ledit procédé comprenant les étapes suivantes :
- bobinage d'au moins une paire de films plastiques métallisés de façon à former la structure empilée des condensateurs ;
- métallisation par shoopage des faces latérales de la structure bobinée afin de créer les armatures des condensateurs ;
- découpe de la structure bobinée et métallisée, ou condensateur-mère, en condensateurs semi-finis ;
- passage des condensateurs semi-finis et de leurs fils de connexion dans un flux de nettoyage ;
- brasage des fils de connexions sur les armatures des condensateurs semi-finis ;

caractérisé en ce que le brasage est réalisé par brasure à la vague et en ce que, entre ladite métallisation par shoopage et ladite découpe, sont réalisées successivement un traitement thermique destiné à donner au film plastique les caractéristiques nécessaires pour supporter la brasure à la vague et une nouvelle métallisation par shoopage à l'aide d'un métal ayant de bonnes caractéristiques de mouillabilité destinée à assurer la qualité mécanique et électrique des connexions.

Un avantage de l'invention est donc de permettre la fabrication de condensateurs dont la tenue mécanique et, partant, le contact électrique des connexions avec les armatures sont excellents.

D'autres caractéristiques et avantages de l'invention apparaîtront à la lecture d'un mode de réalisation préférentiel fait avec référence aux figures jointes.

Selon l'invention, le condensateur-mère subit un traitement thermique après l'étape de métallisation par shoopage des faces latérales. Ce traitement thermique est destiné à donner au film plastique les caractéristiques nécessaires pour supporter la brasure à la vague.

Le métal qui est déposé par shoopage, par exemple de l'aluminium, est choisi de façon à supporter le traitement thermique et à ne pas s'oxyder.

Le traitement thermique consiste à porter les condensateurs à 170 degrés Celsius pendant environ une heure.

Selon l'invention, il est procédé par shoopage à la projection d'un autre métal, par exemple du cuivre, après le traitement thermique. Cette nouvelle étape de métallisation par shoopage à l'aide de cuivre ou de tout autre métal ayant de bonnes caractéristiques de mouillabilité est réalisée de façon à assurer la qualité mécanique et électrique de la connexion qui va être faite.

Le condensateur-mère est ensuite découpé en condensateurs élémentaires dont les armatures sont constituées des deux couches métalliques mentionnées ci-dessus. Chaque armature est alors reliée à un fil de connexion destiné, par exemple, à permettre son montage sur circuit imprimé.

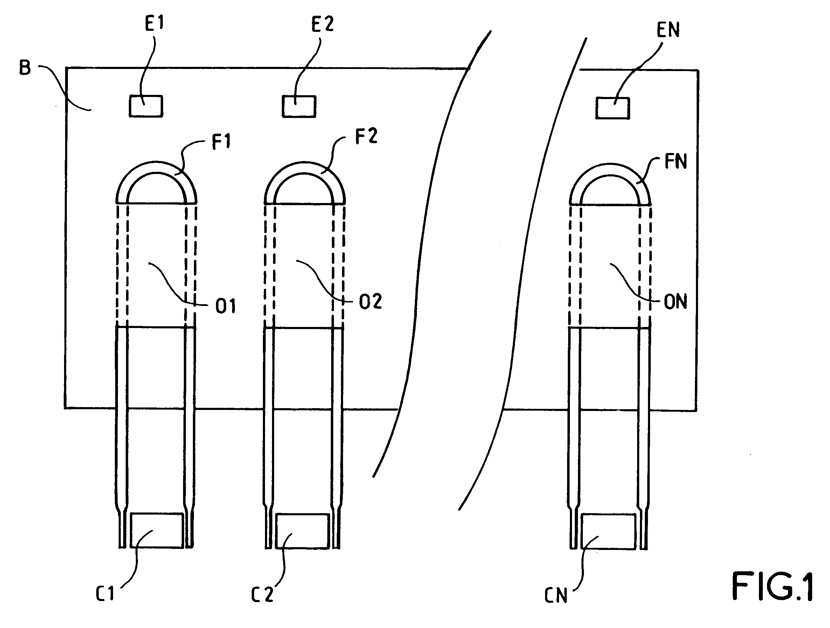

Dans un premier temps, chaque condensateur est placé entre les deux extrémités d'un fil de connexion préalablement mis sous forme de boucle comme cela est représente en figure 1.

Sur la figure 1, selon le mode de réalisation préférentiel, une bande transporteuse continue B supporte N fils de connexion F1, F2, ..., FN. Chaque fil Fi est maintenu sur la bande B par tout moyen mécanique connu, par exemple à l'aide d'une ouverture Oi (i = 1,2, ..., N) pratiquée dans ladite bande. Chaque fil Fi maintient par pression un condensateur Ci entre ses deux extrémités préalablement aplaties afin que ladite pression exercée sur les armatures soit uniformément répartie.

Les condensateurs sont insérés entre les extrémités des fils par tout moyen connu de l'homme de l'art, par exemple à l'aide d'un système de pipette aspirante.

La bande transporteuse B peut comporter des encoches E1, E2,...,EN permettant son maintien sur tout dispositif d'entraînement automatique ou non.

Les condensateurs ainsi disposés sont alors passés dans un flux de nettoyage, par exemple un flux de brasage moussant sans résidu, de façon à s'affranchir de l'opération de nettoyage qu'imposent les flux résineux.

Avantageusement, selon l'invention, il peut alors y avoir une phase de pré-chauffage local des contacts entre fils et armatures afin d'assurer l'activation du flux et de conditionner le condensateur pour l'étape suivante qui est le passage du composant dans une vague d'alliage de brasure.

Selon un mode préféré de l'invention, la buse qui génère la vague de brasure est adaptée à la forme et à la dimension des composants.

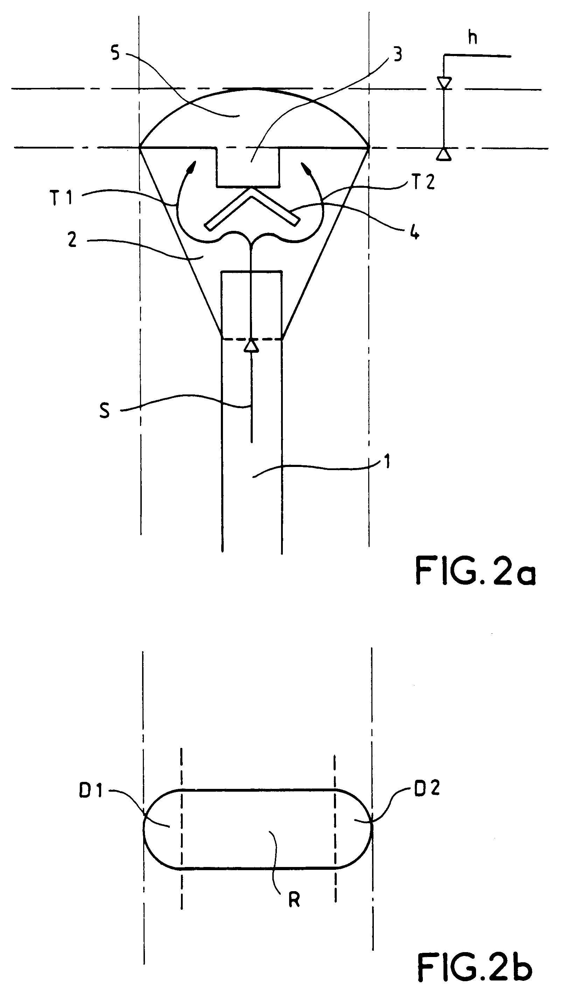

Ainsi, selon le mode de réalisation préférentiel représenté en figure 2a, la buse est-elle constituée d'un tube 1 débouchant dans une ouverture 2, fixée audit tube et s'évasant pour permettre l'évacuation de la brasure. La surface définie par l'évasement de l'ouverture 2 est représentée en figure 2b. Elle est constituée d'un rectangle R dont les deux petits côtés sont prolongés par deux demi-disques D1 et D2.

Le trajet effectué par la brasure est représenté sur la figure 2a. La brasure S remonte dans le tube 1. Un déflecteur 4, solidaire du cône 2, permet d'amortir les variations de débit de soudure en dédoublant le trajet de celle-ci (flèches T1 et T2). La soudure s'évacue alors par deux encoches 3 situées dans la partie supérieure de l'ouverture de la buse. Les deux encoches 3 sont situées au centre des deux grands côtés du rectangle R défini en figure 2b. Avant de s'évacuer la soudure présente, comme cela est connu de l'homme de l'art, un renflement 5 de hauteur h dans sa partie centrale.

La brasure des composants s'effectue en plongeant les condensateurs, et leurs connexions, dans la partie centrale dudit renflement.

La hauteur h du renflement de brasure étant garantie de façon précise grâce à la forme de la buse, un avantage de l'invention est de permettre le brasage des différents condensateurs avec une excellente reproductibilité.

Selon le mode de réalisation préférentiel, l'alliage en fusion qui constitue la vague est composé de 60 % d'étain et de 40 % de plomb. Sa température est de 205° C. Cependant tout autre alliage à bas point de fusion c'est-à-dire situé approximativement entre 180 degrés Celsius et 190 degrés Celsius peut être utilisé. Il en est ainsi, par exemple, de l'alliage constitué de 62 % d'étain, de 36 % de plomb et de 2 % d'argent.

Comme cela a été mentionné précédemment, le procédé peut être automatisé. Les cadences obtenues peuvent alors être très élevées car il est suffisant que le temps de passage de chaque composant dans la vague de brasure soit inférieur à une seconde pour obtenir un joint de brasage correct.

## Revendications

1. Procédé de fabrication de condensateurs feuilletés réalisés par empilement de films plastiques métallisés comprenant les étapes suivantes :
- bobinage d'au moins une paire de films plastiques métallisés de façon à former la structure empilée des condensateurs ;
- métallisation par shoopage des faces latérales de la structure bobinée afin de créer les armatures des condensateurs ;
- découpe de la structure bobinée et métallisée, ou condensateur-mère, en condensateurs semi-finis ;
- passage des condensateurs semi-finis et de leurs fils de connexion dans un flux de nettoyage ;
- brasage des fils de connexions sur les armatures des condensateurs semi-finis ;
caractérisé en ce que le brasage est réalisé par brasure à la vague et en ce que, entre ladite métallisation par shoopage et ladite découpe, sont réalisées successivement un traitement thermique destiné à donner au film plastique les caractéristiques nécessaires pour supporter la brasure à la vague et une nouvelle métallisation par shoopage à l'aide d'un métal ayant de bonnes caractéristiques de mouillabilité destinée à assurer la qualité mécanique et électrique des connexions.

2. Procédé de fabrication de condensateurs selon la revendication 1, caractérisé en ce qu'il utilise, pour réaliser la vague de brasure, une buse (1,2) permettant d'amortir les variations de débit de la brasure et garantissant une quantité de brasure sensiblement constante pour chacun des condensateurs à braser.

3. Procédé de fabrication de condensateurs selon la revendication 2, caractérisé en ce qu'il utilise une buse (1,2) constitué d'un tube (1) débouchant dans une ouverture s'évasant (2), ladite ouverture contenant un déflecteur (4) pour amortir les variations de débit et deux encoches (3) pour évacuer la brasure.

4. Procédé de fabrication de condensateurs selon la revendication 2 ou 3, caractérisé en ce que l'alliage en fusion qui constitue la vague est un alliage à bas point de fusion.

5. Procédé de fabrication de condensateurs selon la revendication 4, caractérisé en ce que l'alliage en fusion est constitué de 60 % d'étain et 40 % de plomb.

6. Procédé de fabrication selon l'une quelconque des revendications précédentes, caractérisé en ce que ladite nouvelle métallisation des armatures est réalisée avec un métal ayant de bonnes caractéristiques de mouillabilité.

7. Procédé de fabrication selon la revendication 6, caractérisé en ce que le métal ayant de bonnes caractéristiques de mouillabilité est du cuivre.

8. Procédé de fabrication selon l'une quelconque des revendications précédentes, caractérisé en ce que l'étape de passage des condensateurs semi-finis et de leurs fils de connexion dans un flux de nettoyage est réalisée à l'aide d'un flux de brasage moussant sans résidu.

9. Procédé de fabrication de condensateurs selon l'une quelconque des revendications précédentes, caractérisé en ce qu'il comprend une étape de pré-chauffage local entre armatures et fils de connexions après le passage des condensateurs semi-finis et de leurs fils de connexion dans un flux de nettoyage.

## Patentansprüche

1. Verfahren zum Herstellen von Folienkondensatoren aus einem Stapel metallisierter Kunststoffolien, enthaltend die folgenden Stufen:
- Wickeln von wenigstens einem Paar metallisierter Kunststoffolien in der Weise, daß die gestapelte Struktur der Kondensatoren entsteht;
- Metallisierung durch Schoopieren der Seitenflächen der gewickelten Struktur, damit die Kondensatorbeläge erzeugt werden;
- Zuschneiden der gewickelten und metallisierten Struktur oder des Mutterkondensators, in halbfertige Kondensatoren;
- Hindurchführen der halbfertigen Kondensatoren durch ein Reinigungsmittel;
- Anlöten von Anschlußdrähten an die Beläge der halbfertigen Kondensatoren;
dadurch gekennzeichnet, daß das Anlöten durch Schwallöten erfolgt und daß zwischen der Metallisierung durch Schoopieren und dem Zerteilen nacheinander eine thermische Bearbeitung, um der Kunststoffolie die notwendigen Eigenschaften verliehen werden, damit sie dem Schwallöten standhält, und eine neue Metallisierung durch Schoopieren mit Hilfe eines Metalls mit guten Benetzbarkeitseigenschaften zur Erzielung der mechanischen und elektrischen Qualität der Anschlüsse durchgeführt werden.

2. Verfahren zum Herstellen von Kondensatoren nach Anspruch 1, dadurch gekennzeichnet, daß zur Erzeugung des Lotschwalls eine Düse (1, 2) angewendet wird, die die Dämpfung der Lotdurchsatzschwankungen ermöglicht und eine im wesentlichen konstante Lötqualität für jeden der zu lötenden Kondensatoren gewährleistet.

3. Verfahren zum Herstellen von Kondensatoren nach Anspruch 2, dadurch gekennzeichnet, daß eine von einem Rohr (1) gebildete Düse (1, 2) angewendet wird, das in eine sich erweiternde Öffnung (2) mündet, wobei die Öffnung ein Ablenkorgan (4) zum Dämpfen der Durchsatzschwankungen sowie zwei Nuten (3) zum Abführen des Lots aufweist.

4. Verfahren zum Herstellen von Kondensatoren nach Anspruch 2 oder 3, dadurch gekennzeichnet, daß die den Schwall bildende Schmelzlegierung eine Legierung mit niedrigem Schmelzpunkt ist.

5. Verfahren zum Herstellen von Kondensatoren nach Anspruch 4, dadurch gekennzeichnet, daß die Schmelzlegierung aus 60 % Zinn und 40 % Blei besteht.

6. Herstellungsverfahren nach einem der vorhergehenden Ansprüche, dadurch gekennzeichnet, daß die neue Metallisierung der Beläge mit einem Metall durchgeführt wird, das gute Benetzbarkeitseigenschaften hat.

7. Herstellungsverfahren nach Anspruch 6, dadurch gekennzeichnet, daß das Metall, das gute Benetzbarkeitseigenschaften hat, Kupfer ist.

8. Herstellungsverfahren nach einem der vorhergehenden Ansprüche, dadurch gekennzeichnet, daß die Stufe der Hindurchführung der halbfertigen Kondensatoren und ihrer Verbindungsdrähte durch ein Reinigungsmittel mit Hilfe eines rückstandsfrei schäumenden Lötflußmittels durchgeführt wird.

9. Verfahren zum Herstellen von Kondensatoren nach einem der vorhergehenden Ansprüche, dadurch gekennzeichnet, daß es eine Stufe des lokalen Vorheizens zwischen den Belägen und den Verbindungsdrähten nach dem Durchgang der halbfertigen Kondensatoren und ihrer Verbindungsdrähte durch ein Reinigungsmittel enthält.

## Claims

1. A method for the manufacture of foil capacitors by the stacking of metallized plastic films comprising the following steps:
- the coiling of at least one pair of metallized plastic films in such a manner as to form the stacked structure of the capacitors;
- metallization by end spraying of the lateral surfaces of the coiled structure in order to create the coatings of the capacitors;
- cutting up the coiled metallized structure or master capacitor to give semi-finished capacitors;
- passing the semi-finished capacitors and the leads thereof into a cleaning flux;
- soldering of the leads to the coatings of the semi-finished capacitors; characterized in that the soldering is performed by wave soldering and in that between the said metallization by end spraying and the said cutting up the following steps are performed successively thermal treatment adapted to endow the plastic film with the characteristics necessary to withstand the wave soldering and further metallization with the aid of a metal having good wettability characteristics by end spraying adapted to provide the mechanical and electrical quality of the connections.

2. The capacitor manufacturing method as claimed in claim 1, characterized by the use of a nozzle (1, 2) for wave soldering in order to overcome variations in the soldering feed rate and to ensure a soldering quality which is substantially the same for each of the capacitors to be soldered.

3. The capacitor manufacturing method as claimed in claim 2, characterized by the use of a nozzle (1, 2) in the form of a tube (1) directed into a diverging opening (2), the said opening containing a deflection means (4) in order to overcome variations in the feed rate and two recesses (3) for the removal of the solder.

4. The capacitor manufacturing method as claimed in claim 2 or in claim 3, characterized in that the fusion alloy, which constitutes the wave, is an alloy with a low fusion point.

5. The capacitor manufacturing method as claimed in claim 4, characterized in that the fusion alloy is constituted by 60 % of tin and 40 % of lead.

6. The capacitor manufacturing method as claimed in any one of the preceding claims, characterized in that the said further metallization of the coatings is performed with a metal having good wettability characteristics.

7. The capacitor manufacturing method as claimed in claim 6, characterized in that the metal having good wettability characteristics is copper.

8. The capacitor manufacturing method as claimed in any one of the preceding claims, characterized in that the stage of passing the semi-finished capacitors and the leads thereof into a cleaning flux is performed with the aid of a soldering flux which foams without any residue.

9. The capacitor manufacturing method as claimed in any one of the preceding claims, characterized in that it comprises a stage of local pre-heating between the coatings and the leads after the passage of the semi-finished capacitors and their leads into the cleaning flux.
